# EUROPEAN PATENT APPLICATION

(11) **EP 4 574 518 A1**
(43) Date of publication of application: **25.06.2025**
(21) Application number: 23219706.1
(22) Date of filing: 22.12.2023
(51) Int. Cl.: B60L 3/00, B60L 3/04, H02H 1/04, H02H 3/093, H02H 7/18, H02J 7/00

(54) **RESETTABLE OVER CURRENT PROTECTION CIRCUITRY**

(71) Applicant: VOLVO TRUCK CORPORATION, 405 08 Göteborg (SE)
(72) Inventor: THELIN, Tomas, 442 70 KÄRNA (SE); NETTO, Diego Santos Pereira, 436 37 ASKIM (SE); LIDSTRÖM, Emil, 423 56 TORSLANDA (SE)
(74) Representative: Ström & Gulliksson AB

(57) **Abstract**

A resettable over current protection circuitry (200) for an energy storage system of a vehicle is presented. The resettable over current protection circuitry (200) is configured to be arranged between one or more battery cells (110) and a load (12) and comprises a transistor device (210) configured for controlling an electrical connection between the battery cell (110) and the load (12). The resettable over current protection circuitry (200) further comprises current sensor circuitry (220) for measuring a load current (*i*₁₂) between the one or more battery cells (110) and the load (12) and control circuitry (230) configured to control the transistor device (210) to break the electrical connection between the one or more battery cells (110) and the load (12) responsive to the load current (*i*₁₂) being above a first predetermined threshold during a first predetermined time.

## Description

### TECHNICAL FIELD

The disclosure relates generally to over current protection. In particular aspects, the disclosure relates to resettable over current protection circuitry. The disclosure can be applied to vehicles in general, nautical vehicles, heavy-duty vehicles, such as trucks, buses, and construction equipment, among other vehicle types. Although the disclosure may be described with respect to a particular vehicle, the disclosure is not restricted to any particular vehicle.

### BACKGROUND

Electric vehicles (EVs) are becoming increasingly popular. EVs comprise high voltage system for propelling the vehicle. These high voltage systems generally operate at voltages between 300 and 800 volts which is provided by high energy EV batteries. These voltages are significantly higher than voltages used in conventional gasoline-powered vehicles. These high voltage and energies poses a risk of excess heating and damages to adjacent and connected components and devices.

### SUMMARY

According to a first aspect of the disclosure, a resettable over current protection circuitry for an energy storage system of a vehicle is presented. The resettable over current protection circuitry is configured to be arranged between one or more battery cells and a load and comprises a transistor device configured for controlling an electrical connection between the battery cell and the load, current sensor circuitry for measuring a load current between the one or more battery cells and the load, control circuitry configured to control the transistor device to break the electrical connection between the one or more battery cells and the load responsive to the load current being above a first predetermined threshold during a first predetermined time. The first aspect of the disclosure may seek to reduce a risk of issues with over current in a vehicle. A technical benefit may include increase of safety, reliability and/or operability of a vehicle.

Optionally in some examples, including in at least one preferred example, the current sensor circuitry comprises a comparator configured to generate a control signal configured to control the transistor device to break the electrical connection between the one or more battery cells and the load. A technical benefit may include having a hardware solution that is fast, reliable and consumes low current.

Optionally in some examples, including in at least one preferred example, the control circuitry is further configured to close the electrical connection between the one or more battery cells and the load responsive to the load current being below a predetermined second threshold during a second predetermined time. A technical benefit may include enabling reactivation and further operation without undue downtime.

Optionally in some examples, including in at least one preferred example, the control circuitry is configured to close the electrical connection between the one or more battery cells and the load responsive to receiving a reset signal. A technical benefit may include allowing external reset to externally override and reset the resettable over current protection circuitry

Optionally in some examples, including in at least one preferred example, the current sensor circuitry comprises a known resistance arranged between the one or more battery cells and the load, and the current sensor circuitry is configured to measure the load current by measuring a voltage drop across the known resistance. A technical benefit may include a low cost solution for acquiring the load current.

Optionally in some examples, including in at least one preferred example, the known resistance is an on-resistance of the transistor device. A technical benefit may include not having to provide a high cost high accuracy resistor in the current path.

Optionally in some examples, including in at least one preferred example, the first predetermined time is determined by a time constant of hardware components of the control circuitry. A technical benefit may include having a hardware solution that is fast, reliable and consumes low current.

Optionally in some examples, including in at least one preferred example, the control circuitry is configured to control the transistor device to limit the electrical connection between the battery cell and the load responsive to the load current being above a third predetermined threshold during a third predetermined time. A technical benefit may include allowing continued operation of the vehicle even if the load current is above a threshold.

Optionally in some examples, including in at least one preferred example, the resettable over current protection circuitry further comprising an internal power source arranged to power the resettable over current protection circuitry. A technical benefit may include allowing the resettable over current protection circuitry to function without draining an external power source and to in absence of an external power source.

Optionally in some examples, including in at least one preferred example, the current sensor circuitry comprises a comparator configured to generate a control signal configured to control the transistor device to break the electrical connection between the one or more battery cells and the load; the control circuitry is further configured to close the electrical connection between the one or more battery cells and the load responsive to the load current being below a predetermined second threshold during a second predetermined time; the control circuitry is configured to close the electrical connection between the one or more battery cells and the load responsive to receiving a reset signal; wherein the current sensor circuitry comprises a known resistance arranged between the one or more battery cells and the load, and the current sensor circuitry is configured to measure the load current by measuring a voltage drop across the known resistance; the known resistance is an on-resistance of the transistor device; the first predetermined time is determined by a time constant of hardware components of the control circuitry; the control circuitry is configured to control the transistor device to limit the electrical connection between the battery cell and the load responsive to the load current being above a third predetermined threshold during a third predetermined time; and further comprising an internal power source arranged to power the resettable over current protection circuitry wherein the internal power source is a rechargeable power source arranged to be charged from the battery cell. A technical benefit may include all of the above benefits and also reduced environmental impact and simplicity of use as the internal power source is not required.

According to a second aspect of the disclosure, battery pack comprising one or more battery cells, at least two terminals for connecting the battery pack to a load and the resettable over current protection circuitry of the first aspect arranged in a current path of the one or more battery cells and the at least two terminals is presented. The second aspect of the disclosure may seek to reduce a risk of issues with over current in a vehicle. A technical benefit may include increase of safety, reliability and/or operability of a vehicle.

According to a third aspect of the disclosure, an energy storage system, comprising at least one battery pack of the second aspect and an energy storage processing circuitry operatively connected to and configured to control the control circuitry of the resettable over current protection circuitry of the battery pack. The third aspect of the disclosure may seek to reduce a risk of issues with over current in a vehicle. A technical benefit may include increase of safety, reliability and/or operability of a vehicle.

Optionally in some examples, including in at least one preferred example, the energy storage system processing circuitry is configured to cause control of the transistor device to provide a pre-charge current to the load. A technical benefit may include a reduced cost of the energy storage system and/or battery pack as the spacious and expensive pre-charge resistor is no longer required. Also, the pre-charge current may be adaptive and is not set by the fixed pre-charge transistor.

Optionally in some examples, including in at least one preferred example, the energy storage system processing circuitry is further configured to cause control of at least one electromechanical connector arranged to selectively connect the at least one battery pack to the load, and prior to causing the electromechanical connector to disconnect the at least one battery pack from the load, control the transistor device to break the electrical connection between the battery cell and the load and/or wherein the energy storage system processing circuitry is configured to, prior to causing the electromechanical connector to connect the at least one battery pack to the load, control the transistor device to break the electrical connection between the battery cell and the load. A technical benefit may include reducing wear of the electromechanical connector.

According to a fourth aspect of the disclosure, a vehicle comprising the energy storage system of the third aspect is presented. The fourth aspect of the disclosure may seek to reduce a risk of issues with over current in a vehicle. A technical benefit may include increase of safety, reliability and/or operability of a vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a side view of an exemplary vehicle according to an example.
**FIG. 2** is a block diagram of an exemplary vehicle according to an example.
**FIG. 3A** is a block diagram of an exemplary resettable over current protection circuitry according to an example.
**FIG. 3B** is a block diagram of an exemplary resettable over current protection circuitry according to an example.
**FIG. 4A** is an exemplary time series plot according to an example.
**FIG. 4B** is an exemplary schematic of a control circuitry according to an example.
**FIG. 5A** is an exemplary time series plot according to an example.
**FIG. 5B** is an exemplary schematic of a control circuitry according to an example.
**FIG. 6A** is an exemplary time series plot according to an example.
**FIG. 6B** is an exemplary schematic of a control circuitry according to an example.
**FIG. 7** is an exemplary time series plot according to an example.
**FIG. 8** is an exemplary block diagram of an energy storage system according to an example.
**FIG. 9** is a block diagram of an exemplary battery pack according to an example.

### DETAILED DESCRIPTION

The detailed description set forth below provides information and examples of the disclosed technology with sufficient detail to enable those skilled in the art to practice the disclosure.

As indicated, high voltage systems of electrical vehicles (EVs) require control, maintenance and security measures in place in order to ensure safe operation of the EV. For instance, even when an EV is turned off, there may still be high voltage present in the system. This is because batteries and capacitive loads of the EV still retain charge. EV batteries contain a lot of energy, and if they are short-circuited, damaged or overheated, they can cause hazardous situations.

In order to ensure safety of persons inside, or at a vicinity of a vehicle, numerous safety measures are generally in place such as automatic high voltage disconnect (AHVD) systems. The AHVD system will disconnect the battery from the rest of the vehicle in the event of an accident or other emergency. AHVD systems can be triggered by a variety of events, such as vehicle collisions, rollover accidents, fire, electrical problems, overheating, software glitches etc. Some AHVD systems can also be triggered manually, using a switch or button located in the vehicle. This can be useful for first responders who need to disconnect the battery pack before working on a damaged EV. Once triggered, the AHVD system generally requires professional service of the vehicle in order to be reset.

Further to the AHVD systems, electrical current paths of vehicles are generally provided with fuses configured to break in case of over currents. An issue with such fuses are that they are generally one-shots and once triggered, they have to be replaced. Such overcurrent protection fuses generally works by melting a metal strip when too much current flows through it.

The present disclosure will present a resettable over current protection circuitry that allows an over current protection circuitry to be reset in case of a temporary overcurrent. The teachings of the present disclosure may be implemented on a single battery cell, a group of battery cells (connected in series and/or parallel), one or more battery packs and/or any other part of an electric power system where over current protection is considered. This is advantageous in situations wherein for instance one battery pack of a plurality of battery packs experiences a temporary over current as although the over current protection circuitry triggers and disconnect the concerned battery pack, the other battery packs may continue to provide power to a load avoiding disruption or stops in operation. The resettable over current protection circuitry may, as the name suggests, be reset without having to replace a broken fuse or mechanically toggle a switch.

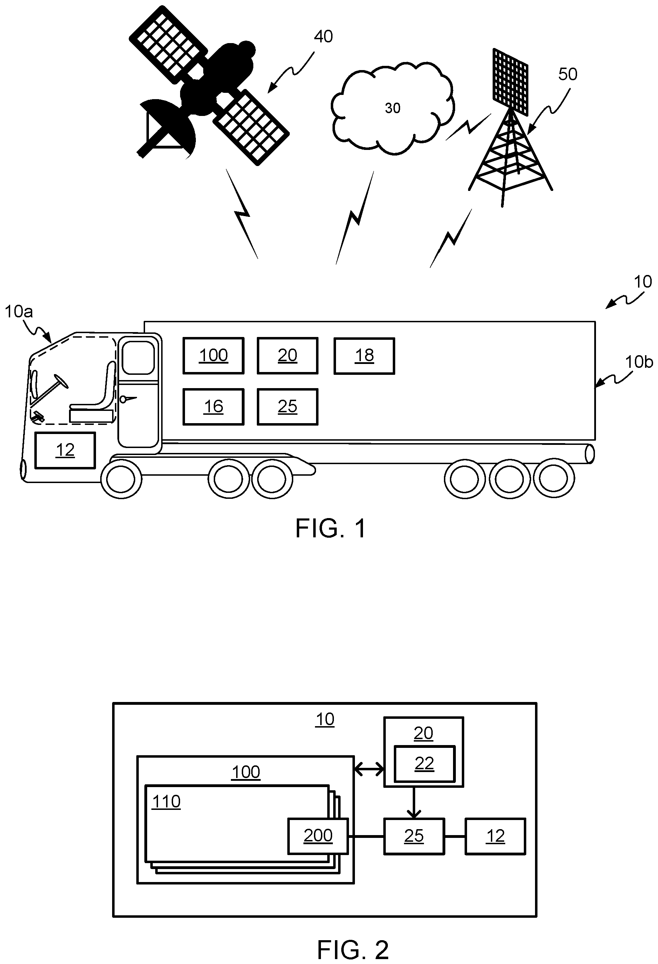

Although the resettable over current protection circuitry of the present disclosure may be applied to any electric circuitry, examples and embodiments will be given mainly in reference to a vehicle **10,** see **FIG. 1. FIG. 1** is an exemplary schematic side view of a heavy-duty vehicle **10** (hereinafter referred to as vehicle **10).** The vehicle **10** comprises a tractor unit **10a** which is arranged to tow a trailer unit **10b.** In other examples, other vehicles may be employed, e.g., trucks, buses, nautical vehicles and construction equipment. The vehicle **10** comprises all vehicle units and associated functionality to operate as expected, such as a powertrain, chassis, and various control systems. The vehicle **10** comprises one or more propulsion sources **12.** The propulsion source **12** may be any suitable propulsion source **12** exemplified by, but not limited to, one or more or a combination of an electrical motor, a combustion engine such as a diesel, gas or gasoline powered engine. The vehicle **10** further comprises an energy source **100** suitable for providing energy for the propulsion source **12.** That is to say, if the propulsion source **12** is an electrical motor, a suitable energy source **100** would be a battery or a fuel cell. The vehicle **10** further comprises sensor circuitry **16** arranged to detect, measure, sense or otherwise obtain data relevant for operation of the vehicle **10.** The sensor circuit **16** may comprise one or more of a voltmeter, a current meter, an accelerometer, a gyroscope, a wheel Speed Sensor, an ABS sensor, a throttle position sensor, a fuel level sensor, a temperature Sensor, a pressure sensor, a rain sensor, a light sensor, proximity sensor, a lane departure warning sensor, a blind spot detection sensor, a TPMS sensor etc. Operational data relevant for operation of the vehicle **10** may include, but is not limited to, one or more of a speed of the vehicle **10,** a weight of the vehicle **10,** an inclination of the vehicle **10,** a status of the energy source **100** of the vehicle **10** (state of charge, fuel level etc.), a current speed limit of a current road travelled by the vehicle **10,** etc. The vehicle **10** may further comprise communications circuitry **18** configured to receive and/or send communication. The communications circuitry **18** may be configured to enable the vehicle **10** to communicate with one or more external devices or systems such as a cloud server 3**0.** The communication with the external devices or systems may be directly or via a communications interface such as a cellular communications interface **50,** such as a radio base station. The cloud server **30** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **18** may, additionally or alternatively, be configured to enable the vehicle **10** to be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10** may be configured to utilize data obtain from the GNSS **40** to determine a geographical location of the vehicle **10.**

The exemplary vehicle **10** of **FIG. 1** is an electrical vehicle (EV) which is to mean a vehicle **10** at least partially propellable by an electrical propulsion source **12,** preferably an electrical motor **12.** The electrical motor **12** is powered by one or more battery packs **100.** The vehicle **10** further comprise a energy storage system **20,** sometimes referred to as a battery management system **20.** The energy storage system **20** is configured to monitor and/or control operation of the one or more battery packs **100.** The vehicle **10** further comprise an electromechanical connector **25** arranged to selectively connect the battery pack **100** to the electrical motor **12,** i.e. the load **12.**

In **FIG. 2****,** a partial block diagram of a vehicle **10** according to the present disclosure is shown. The vehicle **10** comprises a battery pack **100,** an optional electromechanical connector **25,** a load **12** in the form of an electrical motor **12,** and an energy storage system **20.** The electromechanical connector **25** is arranged to control an electrical connection between the load **12** and the battery pack **100.** The energy storage system **20** is operatively connected to the battery pack **100** and is arranged to control the optional electromechanical connector **25.** To this end, the energy storage system **20** comprises energy storage system processing circuitry **22.**

Generally, the electromechanical connector **25** (if present) is provided to allow a controlled disconnect of the battery pack **100** prior to service, replacement or other maintenance of the battery pack **100** and/or vehicle **10.** An electromechanical connector **25** is to mean any connector that galvanically breaks a current path responsive to electrical controls. One example of an electromechanical connector **25** may be a relay. In some examples, the electromechanical connector **25** may be a motorized connector controllable to move e.g. a connecter in and out of galvanic contact with poles of a battery pack **100.**

The battery pack **100** in **FIG. 2** comprise a plurality of battery cells **110.** This is one example, and in other examples, the battery pack **100** comprise only one battery cell **110.** The battery cells **110** may be connected in series to allow the battery pack **100** to provide a voltage higher than a voltage of each of the battery cells **110.** The battery cells **110** may be connected in parallel to allow the battery pack **100** to provide a capacitance that is higher than a capacitance of each of the battery cells **110.** In some examples, the battery pack **100** comprises a plurality of sets of battery cells **110.** Battery cells **110** of each set of battery cells are connected in series and the sets of battery cells are connected in parallel to provide both an increased voltage and capacitance from the battery pack **100** compared to what is offer by a single battery cell **110.** Regardless of how the battery cells **110** are connected, the battery pack **100** may comprise one or more resettable over current protection circuitry **200.** The one or more resettable over current protection circuitry **200** may be connected in any current path of the battery pack **100.** In the following, the resettable over current protection circuitry **200** will be described as arranged in a current path between the battery cells **110** of the battery pack **100** and the load **12.** However, other arrangements of the resettable over current protection circuitry **200** will be directly derivable form the present disclosure even if they are not explicitly mentioned.

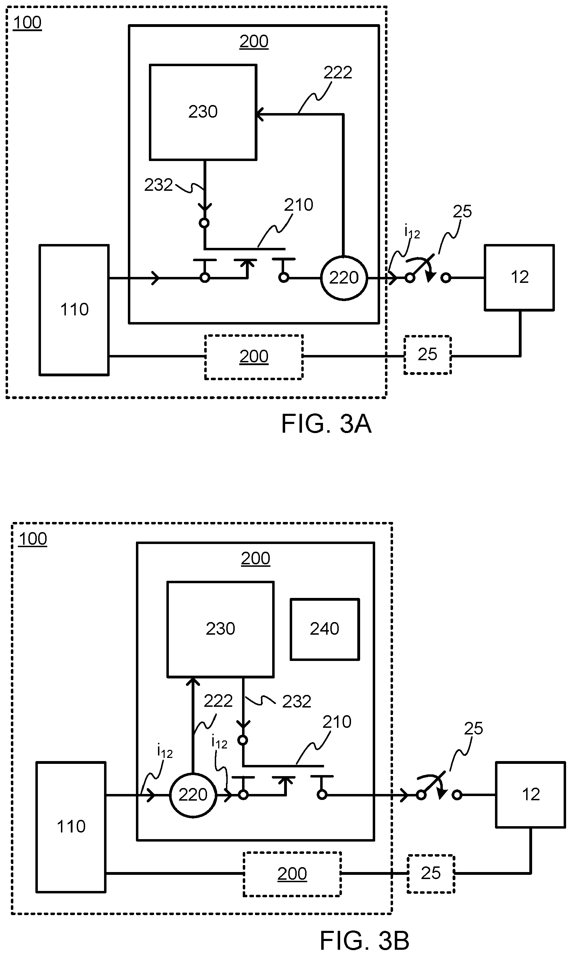

In **FIG. 3A** and **FIG. 3B****,** block diagrams of exemplary resettable over current protection circuitry **200** connected in series between one or more battery cells **110** and a load **12** are shown. The resettable over current protection circuitry **200** comprises a transistor device **210,** sensor circuitry **220** and control circuitry **230.**

The transistor device **210** is arranged to control an electrical connection between the battery cell **110** and the load **12.** The transistor device **210** may be any suitable transistor device **210** exemplified by, but not limited to, a bipolar junction transistor (BJT), a field-effect transistor (FET) (e.g. junction FET, metal-oxide-semiconductor FET, metal-semiconductor FET), an insulated gate bipolar transistors (IGBT), a heterojunction bipolar transistor (HBT), etc. The selection of the particular type of transistor device **210** will generally depend on design parameters such as expected current handling capabilities (continuous current, breakable current etc.), voltage handling capabilities, switching speed etc.

The sensor circuitry **220** is configured to obtain a load current ***i*₁₂,** i.e. a current into the load **12** or into (in case of charging) the battery cell **110.** The sensor circuitry **220** may form part of, or be operatively connected to, the previously mentioned sensor circuit **16** of the vehicle **10.** The sensor circuit **220** may comprise any suitable circuitry to estimate, measure, determine or otherwise obtain the load current load current ***i*₁₂.** In some examples, the sensor circuitry **220** comprises circuitry for indirect measurement of the load current ***i*₁₂** such as a known resistance connected in series in the path of the load current ***i*₁₂** and voltage measuring circuit arranged to obtain a voltage drop actor the known resistance. The load current ***i*₁₂** may in such examples be determined by Ohm's law. In some examples, the sensor circuit comprises circuitry for direct measurement of the load current ***i*₁₂** such as a moving coil ampere meter, a moving magnet ampere meter, an electrodynamic ampere meter, a moving iron ampere meter etc. In some examples, the sensor circuitry **220** comprises circuitry to obtain a voltage drop across the transistor device **210.** The voltage drop across the transistor device **210** may be utilized together with a known on-resistance of the transistor device **210** to determine the load current ***i*₁₂** by Ohm's law. The on-resistance may, depending on the type of transistor device, vary with temperature, control current or voltage (a control signal **232),** etc. of the transistor device **210** which is known in the art.

The control circuitry **230** is configured to control the transistor device **210.** The control circuitry is configured to provide the control signal **232** for control of the transistor device **210** to control the transistor device **210** to conduct, i.e. close the electrical connection between the battery cell **110** and the load **12,** or not to conduct, i.e. break the electrical connection between the battery cell **110** and the load **12.** The control circuitry **230** is configured to control the transistor device **210** based on the load current ***i*₁₂.** To this end, the control circuitry **230** is operatively connected to the sensor circuitry **220** and configured to obtain current data **222** from the sensor circuitry **220.** The current data **222** may be any suitable representation of the load current ***i*₁₂,** such as a voltage level etc.

In **FIG. 3A****,** the sensor circuitry **220** is arranged between the transistor device **210** and the load **12.** In **FIG. 3B****,** the sensor circuitry **220** is arranged between the transistor device **210** and the battery cell **110.** In other examples, sensor circuitry may be arranged both between the transistor device **210** and the load **12,** and between the transistor device **210** and the battery cell **110.** Any of these examples may be combined with sensor circuitry **220** comprising circuitry to obtain a voltage drop across the transistor device **210.**

As seen in **FIG. 3A** and **FIG. 3B****,** resettable over current protection circuitry **200** may be provided in either an output and/or a return current path between the battery cell(s) 110 and the load **12.** The optional electromechanical connector **25** may be provided in either an output and/or a return current path between the battery cell(s) **110** and the load **12.**

As seen in **FIG. 3B****,** the resettable over current protection circuitry **200** may comprise an internal power source **240.** The internal power source **240** is only illustrated in **FIG. 3B****,** but may very well be provided in any other example of the resettable over current protection circuitry **200.** The internal power source **240** may be any suitable power source **240** capable of providing power to the resettable over current protection circuitry **200.** The internal power source **240** may be one or more of a non-rechargeable battery, a rechargeable battery, a capacitor or a super-capacitor. In case of a rechargeable internal power source **240,** the internal power source **240** may be charged from the battery cell **110** and/or any other external charger. The internal power source **240** may be a removable internal power sources **240.** The internal power source **240** enables the resettable over current protection circuitry **200** to function even if no external power is available to the resettable over current protection circuitry **200.**

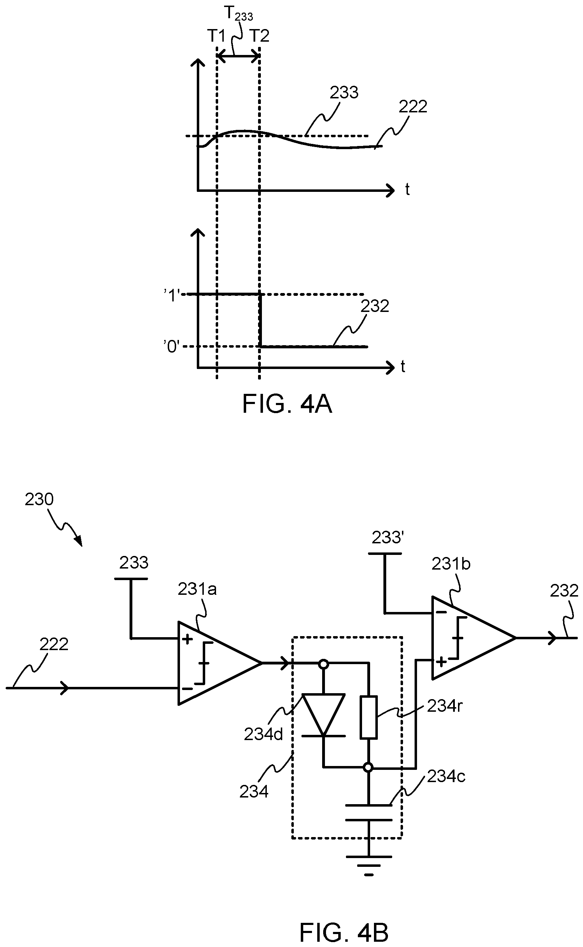

In **FIG. 4A****,** exemplary time signal plots of the control signal **232** (lower graph) and the current data **222** (upper graph) are shown in reference to an aligned a common time axis **t.** As seen in the upper graph, at a first point in time **T1,** the current data **222** indicate a value of the load current ***i*₁₂** exceeding a first predetermined threshold **233.** However, as seen in the lower graph of **FIG. 4A****,** the control signal **232** remains at an active or high state indicated by '1' in **FIG. 4A****.** It should be noted that the naming of the e.g. the control signal **232** suggests that the transistor device **210** is active (conducting) responsive to a high control signal **232** but this is but one example and adjusting plots, circuitry, examples and embodiments of the present disclosure to be active at a low control signal **232** is, after having digested the teachings of the present disclosure, well within the knowledge of the skilled person. At a second point in time **T2,** the current data **222** has indicated values of the load current ***i*₁₂** exceeding the first predetermined threshold **233** for a first predetermined time ***T*₂₃₃.** It is not until the second point in time **T2** that the control signal **232** toggles to an inactive or low state indicated by '0' in **FIG. 4A****,** i.e. breaks the current path between the battery cell **110** and the load **12.**

Delaying the deactivation of the transistor device **210** by the first predetermined time ***T*₂₃₃** enables triggering not only based on an absolute over current, or an amount of over energy which is the case with one-shot fuses. A one-shot fuse would generally trigger by breaking a conductor inside the one-shot fuse due to heating of the conductor. The heating of the conductor will depend on an amount of current and a time it takes for a one-shot fuse to trigger will depend on a magnitude of the overcurrent. Further, repeated current peaks above a threshold current may heat the one-shot fuse and cause it to trigger after a time. The delayed activation as presented in **FIG. 4A** will always trigger after the load current ***i*₁₂** exceeding the first predetermined threshold **233** (or an indication of the load current ***i*₁₂** exceeding the first predetermined threshold **233)** for the first predetermined time ***T*₂₃₃,** regardless of how much or little or much load current ***i*₁₂** (or the indication of the load current ***i*₁₂)** exceeds the first predetermined threshold **233.**

The behavior of the control signal **232** indicated with reference to **FIG. 4A** may be provided by a software implemented run on a control circuitry **230** comprising processing circuitry. However, in order to ensure functionality and reaction speed of the control circuitry **230,** the functionality is advantageously implemented mainly in hardware solution.

In **FIG. 4B****,** an exemplary control circuitry **230** is shown. The control circuitry **230** in **FIG. 4B** is configured to provide the control signal **232** at an active state (high or ` 1') as long as the current data **222** is below the first predetermined threshold **233.** In **FIG. 4B****,** the first predetermined threshold **233** and the current data **222** are voltage levels are voltage levels provided to a first comparator circuitry **231a.** The current data **222** is provided at a negative input of the first comparator circuitry **231a** and the first predetermined threshold **233** is provided at a positive input of the first comparator circuitry **231a.** As long as the current data **222** is below the first predetermined threshold **233,** an output of the first comparator circuitry **231a** will be set at a high state (active or ` 1'). The output of the first comparator circuitry **231a** is connected a positive input of second comparator circuitry **231b** via filter circuitry **234.** A negative input of the second comparator circuitry **231b** is connected to a first intermediate threshold **233'.** The control signal **232** is provided at an output of the second comparator circuitry **231b** and will be at an active state (high or '1') as long as the output of the filter circuitry **234** is greater than the first intermediate threshold **233'.**

In order to control the control signal **232** to be inactive (low or '0') in response to the current data **222** exceeding the first predetermined threshold **233** for the first predetermined time ***T*₂₃₃,** the filter circuitry **234** is configured with a time constant such that it takes the first predetermined time ***T*₂₃₃** for an output of the filter circuitry **234** to fall below the first intermediate threshold **233'.** In **FIG. 4B****,** filter circuitry **234** comprises a filter resistor **234r** connected, at one terminal, to an input of the filter circuitry **234** and at another terminal to one terminal of a filter capacitor **234c** of the filter circuitry **234.** Another terminal of the filter capacitor is connected to a reference ground. An output of the filter circuitry **234** is provided between the filter resistor **234r** and the filter capacitor **234c** and, as mentioned, connected to the positive input of the second comparator circuitry **231b.** Responsive to the current data **222** exceeding the first predetermined threshold **233,** the output of the first comparator circuitry **231a** will be set low ('0') discharging the filter capacitor **234c** via the filter resistor **234r** with a time constant determined by a product between a capacitance of the filter capacitor **234c** (including any stray capacitance) and a resistance of the filter resistance **234r** (including any stray resistance). This will cause a voltage at the output of the filter circuitry **234** to slowly decrease (at least) until it falls below the first intermediate threshold **233'** and the output of the second comparator circuitry **231b** will be set low ('0') and consequently the control signal **232** will be set at the inactive state (low or '0'). In order to ensure that the filter circuitry **234** is reset responsive to the current data **222** no longer exceeding the first predetermined threshold **233** a filter diode **234d** may be provided in parallel with the filter resistor **234r** arranged to permit a substantially unhindered flow of current into the filter capacitor **234c** but forcing a current out from the filter capacitor **234c** to flow through the filter resistor **234r.**

In the exemplary circuitry shown in **FIG. 4B****,** the first predetermined time ***T*₂₃₃** is determined by the time constant of the filter circuitry **234** and the first intermediate threshold 233'. It may be that the first predetermined time ***T*₂₃₃** is a configurable time. In such examples, the first predetermined time ***T*₂₃₃** may be configured by changing the first intermediate threshold **233'.** An increase of the first intermediate threshold **233'** will decrease the first predetermined time ***T*₂₃₃** and a decrease of the first intermediate threshold **233'** will increase the first predetermined time ***T*₂₃₃**

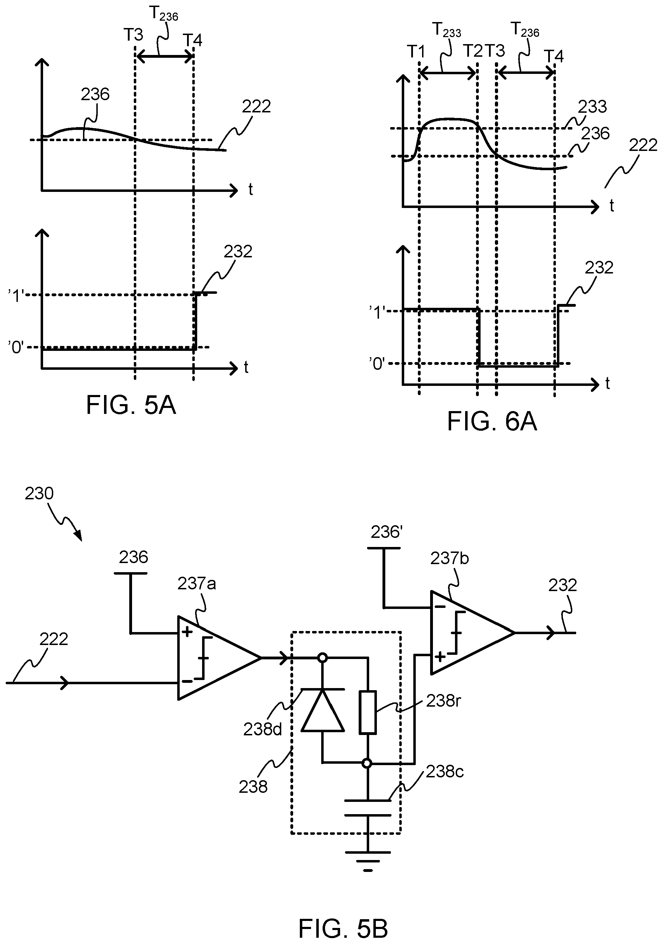

The examples presented with reference to **FIG. 4A** and **FIG. 4B** are given in regards to deactivating the transistor device **210,** i.e. breaking a current path between the battery cell **110** and the load **12.** Optionally, the corresponding features may be provided in relation to activation of the transistor device **210,** i.e. closing a current path between the battery cell **110** and the load **12.** This enables the over current protection circuitry to be automatically reset in the absence of an overcurrent. In **FIG. 5A****,** exemplary time signal plots of the control signal **232** (lower graph) and the current data **222** (upper graph) are shown in reference to an aligned a common time axis **t.** As seen in the upper graph, at a third point in time **T3,** the current data **222** indicate a value of the load current ***i*₁₂** being below a second predetermined threshold **236.** However, as seen in the lower graph of **FIG. 5A****,** the control signal **232** remains at an inactive state (low or '0'). As in **FIG. 4A****,** in **FIG. 5A****,** the naming of the e.g. the control signal **232** suggests that the transistor device **210** is active (conducting) responsive to a high control signal **232** but this is but one example and adjusting plots, circuitry, examples and embodiments of the present disclosure to be active at a low control signal **232** is, after having digested the teachings of the present disclosure, well within the knowledge of the skilled person. At a fourth point in time **T4,** the current data **222** has indicated values of the load current ***i*₁₂** being below the second predetermined threshold **236** for a second predetermined time ***T*₂₃₆.** It is not until the fourth point in time **T4** that the control signal **232** toggles to an active sate (high or ` 1'), i.e. closes the current path between the battery cell **110** and the load **12.**

Delaying the activation of the transistor device **210** by the second predetermined time ***T*₂₃₆** introduces hysteresis in the control of the transistor device **210.** Adding the second predetermined time ***T*₂₃₆** before an automatic reset of the over current protection circuitry 200 is provided reduces a risk of any temporary faults or issues causing over current remain.

The behavior of the control signal **232** indicated with reference to **FIG. 5A** may be provided by a software implemented run on a control circuitry **230** comprising processing circuitry. However, in order to ensure functionality and reaction speed of the control circuitry **230,** the functionality is advantageously implemented mainly in hardware solution.

In **FIG. 5B****,** an exemplary partial control circuitry **230** is shown. The control circuitry **230** in **FIG. 5B** is configured to provide the control signal **232** at an active state (high or ` 1') only after the current data **222** has been below the second predetermined threshold **236** for the second predetermined time ***T*₂₃₆.** In **FIG. 5B****,** the second predetermined threshold **236** and the current data **222** are voltage levels are voltage levels provided to a first comparator circuitry **237a.** The current data **222** is provided at a negative input of the first comparator circuitry **237a** and the second predetermined threshold **233** is provided at a positive input of the first comparator circuitry **237a.** As long as the current data **222** is above the second predetermined threshold **236,** an output of the first comparator circuitry **237a** will be set at a low state (inactive or '0'). The output of the first comparator circuitry **237a** is connected a positive input of second comparator circuitry **237b** via filter circuitry **238.** A negative input of the second comparator circuitry **237b** is connected to a second intermediate threshold **236'.** The control signal **232** is provided at an output of the second comparator circuitry **237b** and will be at an inactive state (low or '0')as long as the output of the filter circuitry **238** is below the second intermediate threshold **236'.**

In order to control the control signal **232** to be active (high or ` 1') in response to the current data **222** being below the second predetermined threshold **236** for the second predetermined time ***T*₂₃₆,** the filter circuitry **238** is configured with a time constant such that it takes the second predetermined time ***T*₂₃₃** for an output of the filter circuitry **238** to exceed the first intermediate threshold **236'.** In **FIG. 5B****,** filter circuitry **238** comprises a filter resistor **238r** connected, at one terminal, to an input of the filter circuitry **238** and at another terminal to one terminal of a filter capacitor **238c** of the filter circuitry **238.** Another terminal of the filter capacitor **238c** is connected to a reference ground. An output of the filter circuitry **238** is provided between the filter resistor **238r** and the filter capacitor **238c** and, as mentioned, connected to the positive input of the second comparator circuitry **237b.** Responsive to the current data **222** falling below the second predetermined threshold **236,** the output of the first comparator circuitry **237a** will be set high (` 1') charging the filter capacitor **238c** via the filter resistor **238r** with a time constant determined by a product between a capacitance of the filter capacitor **238c** (including any stray capacitance) and a resistance of the filter resistance **238r** (including any stray resistance). This will cause a voltage at the output of the filter circuitry **238** to slowly increase at least until it is above the second intermediate threshold **236'** and the output of the second comparator circuitry **237b** will be set high (` 1') and consequently the control signal **232** will be set at the active state (hight or ` 1') state. In order to ensure that the filter circuitry **238** is reset responsive to the current data **222** no longer being below the second predetermined threshold **236,** a filter diode **238d** may be provided in parallel with the filter resistor **238r** arranged to permit a substantially unhindered flow of current out from the filter capacitor **238c** but forcing a current into the filter capacitor **238c** to flow through the filter resistor **238r.**

In the exemplary circuitry shown in **FIG. 5B****,** the second predetermined time ***T*₂₃₆** is determined by the time constant of the filter circuitry **238** and the first intermediate threshold **236'.** It may be that the second predetermined time ***T*₂₃₆** is a configurable time. In such examples, the second predetermined time ***T*₂₃₆** may be configured by changing the second intermediate threshold **236'.** An increase of the second intermediate threshold **236'** will decrease the second predetermined time ***T*₂₃₆** and a decrease of the second intermediate threshold **236'** will increase the second predetermined time ***T*₂₃₆**

The exemplary circuitry shown in **FIG. 4B** and **FIG. 5B** are exemplary circuitry and the present disclosure should not be considered limited to this example. There are numerous different techniques, circuits and features to provide the functionality indicated in **FIG. 4A** and **FIG. 5A****.**

In **FIG. 6A****,** exemplary time signal plots of the control signal **232** (lower graph) and the current data **222** (upper graph) are shown in reference to an aligned a common time axis **t.** As seen in the upper graph, at a first point in time **T1,** the current data **222** indicate a value of the load current ***i*₁₂** exceeding the first predetermined threshold **233.** However, as seen in the lower graph of **FIG. 6A****,** the control signal **232** remains at an active or high state indicated by ` 1' in **FIG. 4A****.** At a second point in time **T2,** the current data **222** has indicated values of the load current ***i*₁₂** exceeding the first predetermined threshold **233** for the first predetermined time ***T*₂₃₃.** At the second point in time **T2,** the control signal **232** toggles to an inactive or low state indicated by '0' in **FIG. 6A****,** i.e. breaks the current path between the battery cell **110** and the load **12.** At a third point in time **T3,** the current data **222** indicate a value of the load current ***i*₁₂** being below the second predetermined threshold **236.** However, as seen in the lower graph of **FIG. 6A****,** the control signal **232** remains at an inactive state (low or '0'). At a fourth point in time **T4,** the current data **222** has indicated values of the load current ***i*₁₂** being below the second predetermined threshold **236** for a duration of the second predetermined time ***T*₂₃₆.** It is not until the fourth point in time **T4** that the control signal **232** toggles to an active sate (high or ` 1'), i.e. closes the current path between the battery cell **110** and the load **12.**

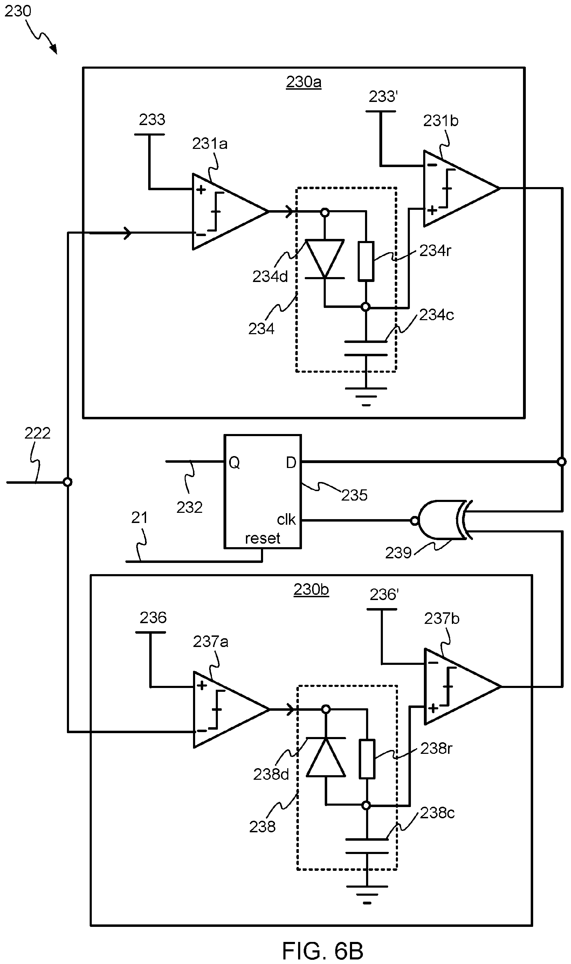

The behavior described in reference to **FIG. 6A** may be seen as a combination of the behaviors described in reference to **FIG. 4A** and **FIG. 5A****.** As a result control circuitry **230** comprising first partial control circuitry **230a** identical to the control circuitry of **FIG. 4B** and second partial control circuitry **230b** identical to control circuitry of **FIG. 5B** is shown in **FIG. 6B****.** The outputs of the first partial control circuitry **230a** and second partial control circuitry **230b,** i.e. outputs of the respective second comparator circuitry **231b, 237b,** are connected to inputs of exclusive-not-or (XNOR) circuitry **239.** The control signal **232** is provided at an output a flip-flop **235** clocked by an output of the XNOR circuitry **239.** The first partial control circuitry **230a** will generate a low ('0') output in response to the load current ***i*₁₂** having exceeded the first predetermined threshold **233** for the first predetermined time ***T*₂₃₃** and a will generate a high (` 1') output substantially synchronously to the load current i₁₂ being below the first predetermined threshold **233.** The second partial control circuitry **230b** will generate a high (` 1') output in response to the load current ***i*₁₂** having been below the second predetermined threshold **236** for the second predetermined time ***T*₂₃₆** and a will generate a low ('0') output substantially synchronously to the load current ***i*₁₂** exceeding the second predetermined threshold **236.** The XNOR circuitry **239** will generate a high (` 1') output in response to the outputs of the respective partial control circuitry **230a, 230b** being equal. The flip-flop **235** is assumed to be positive edge triggered, i.e. when a rising edge (or positive edge) is presented at a clock input "clk" of the flip-flop **235,** the flip-flop **235** transfer a logic value present at a data input "D" of the flip-flop **235** to an output "Q" of the flip-flop **235.** As mentioned, the output of the XNOR circuitry **239** is connected to the clock input "clk" of the flip-flop **235** which means that, in response to the XNOR circuitry **239** transitioning to high state (` 1'), i.e. the respective outputs from the partial control circuitry **230a, 230b** are equal, a signal at the data input "D" of the flip-flop **235** will be provided at the output "Q" of the flip-flop **235,** i.e. the control signal **232.** In **FIG. 6B****,** the data input "D" of the flip-flop **235** is connected to the output of the first partial control circuitry **230a.** However, as the flip-flip **235** is triggered in response to the outputs of both the first partial control circuitry **230a** and the second partial control circuitry **230b** being equal, the data input "D" of the flip-flop **235** may, alternatively, be connected to the output of the second partial control circuitry **230b.**

In the example of **FIG. 6A****,** the first predetermined threshold **233** is greater than the second predetermined threshold **236.** This is one example, and in other examples, the first predetermined threshold **233** is equal to the second predetermined threshold **236.** The example presented in **FIG. 6B** is compatible with both scenarios, i.e. the first predetermined threshold **233** being greater than the second predetermined threshold **236,** or the first predetermined threshold **233** being equal to the second predetermined threshold **236.**

The control circuitry **230** may be configured to receive a reset signal **21** and to close the electrical connection between the battery cell **210** and the load **12** in response to the reset signal **21.** The reset signal **21** may, as indicated in **FIG. 6B****,** be connected to a reset input "reset" of the flip-flop **235.** The flip-flop **235** is configured to generate a high (` 1') signal at the output "Q" of the flip-flop **235** in response to the reset signal **21.** The reset signal **21** may very well be implemented in any other example presented herein and is not limited to the example of **FIG. 6B****.**

The exemplary control circuitry **230** presented with reference to **FIG. 4B****,** **FIG. 5B** and **FIG. 6B** are configured to open or closed the current path between the battery cell **110** and the load **12.** Correspondingly, rather than strictly opening or closing the current path between the battery cell **110** and the load **12,** the control circuitry **230** may be configured to limit the load current ***i*₁₂.** The control circuitry **230** may be configured to limit the load current ***i*₁₂** by pulse width modulation (PWM) of the transistor device **210** or controlling an on-resistance of the transistor device **210,** i.e. partly opening or closing the transistor device **210** (linear control of the transistor device **210).** By limiting the load current ***i*₁₂** rather than disconnecting the battery cell **110** from the load **12,** operation of the load **12** may be maintained but at a reduced load current ***i*₁₂.** If, for instance, the load **12** is an electrical propulsion source of a vehicle **10,** the vehicle **10** may still be operational, but with a limited torque from the electrical propulsion source.

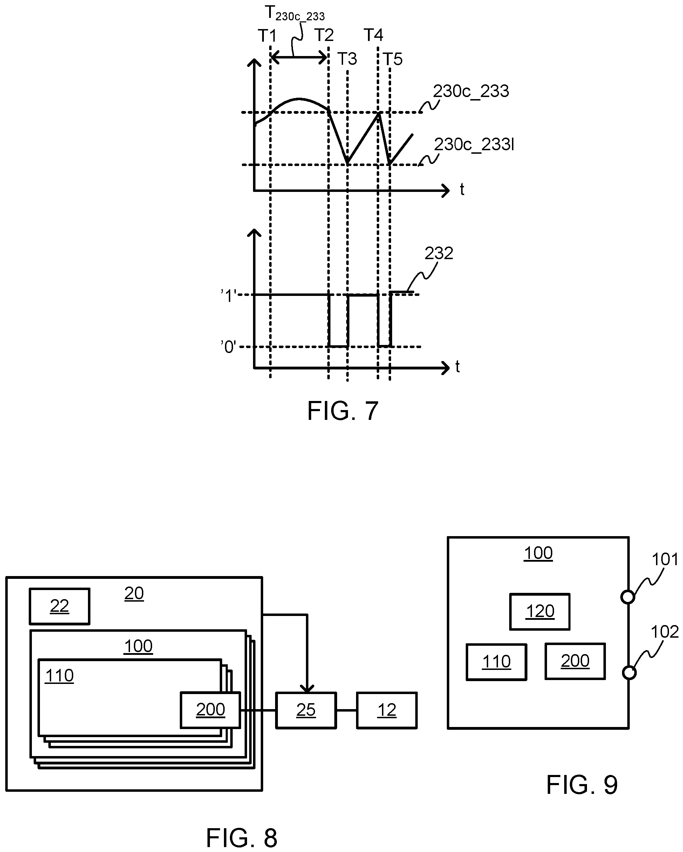

In **FIG. 7****,** exemplary time signal plots of the control signal **232** (lower graph) and the current data **222** (upper graph) are shown in reference to an aligned a common time axis **t.** As seen in the upper graph, at a first point in time **T1,** the current data **222** indicate a value of the load current ***i*₁₂** exceeding a third predetermined threshold **230c_233.** However, as seen in the lower graph of **FIG. 7****,** the control signal **232** remains at an active or high state indicated by ` 1' in **FIG. 7****.** At a second point in time **T2,** the current data **222** has indicated values of the load current ***i*₁₂** exceeding the third predetermined threshold **230c_233** for a third predetermined time ***T*_{230c_233}.** It is not until the second point in time **T2** that the control signal **232** toggles to an inactive or low state indicated by '0' in **FIG. 7****,** i.e. breaks the current path between the battery cell **110** and the load **12.** At a third point in time **T3,** the current data **222** indicate a value of the load current ***i*₁₂** at or below a third predetermined lower threshold **230c** _**2331.** At the third point in time **T3,** the control signal **232** toggles to an active state (` 1') and closes the current path between the battery cell **110** and the load **12.** The current data **222** indicate an increasing value of the load current ***i*₁₂** and at a fourth point in time **T4,** the current data **222** indicate a value of the load current ***i*₁₂** exceeding the third predetermined threshold **230c_233.** At the fourth point in time **T4,** the control signal **232** once more toggles to an inactive state ('0') and breaks the current path between the battery cell **110** and the load **12.** At a fifth point in time **T5,** the current data **222** once more indicate a value of the load current ***i*₁₂** at or below a third predetermined lower threshold **230c_2331.** At the fifth point in time **T5,** the control signal **232** toggles to an active state ('1') and closes the current path between the battery cell **110** and the load **12.** The resulting control signal **232** may be described as a PWM signal.

Generally, if the load **12** comprises an electrical motor and associated control circuitry such as inverters etc., the load **12** will exhibit a substantial capacitance to a battery pack **100** and/or battery cells **110** connected to the load **12.** If the capacitances of the load **12** are substantially discharged, the capacitances of the load **12** will cause a significant inrush current upon connection of the battery pack **100** to the load **12.** To reduce a magnitude of the inrush current, the electrical current path between the battery pack **100** and/or battery cells **110** may be provided with a selectively connectable pre-charge circuitry. The pre-charge circuitry generally comprise at least one switch arranged to selectively connect a pre-charge resistor in a current path between the battery cells **110** and the load **12** or to bypass the pre-charge resistor. However, the pre-charge resistor is a comparably expensive component as it is required to dissipate significant amount of heat in order to keep a time for pre-charge short which means that pre-charge resistors are generally both large and expensive. However, as indicated with reference to e.g. **FIG. 7****,** the resettable over current protection circuitry **200** of the present disclosure may be configured to control and limit the load current ***i*₁₂.** In other words, the resettable over current protection circuitry **200** and the control circuitry **230** may be configured to replace a pre-charge resistor between battery cells **110** and a load **12.** The resettable over current protection circuitry **200** may consequently reduce a cost of a battery pack **100,** a energy storage system **20** and/or a vehicle **10** depending on where a pre-charge resistor would have been arranged.

In **FIG. 8** one example of a energy storage system **20** is shown. The energy storage system **20** of **FIG. 8** is similar to the energy storage system **20** introduced with reference to **FIG. 2** but comprise one or more battery packs **100.** In other examples, not shown, the energy storage system **20** may comprise the electromechanical connector **25.** Regardless of the specific example of the energy storage system **20** being referenced, the energy storage system **20,** or rather the energy storage system processing circuitry **22,** may be configured to control the resettable over current protection circuitry **200** to e.g. provide a pre-charge functionality, i.e. limit the load current ***i*₁₂** by PWM or linear control of the transistor device **210.**

The energy storage system **20,** i.e. the energy storage system processing circuitry **22,** may further be configured to cause control of the electromechanical connector **25.** As mentioned, the electromechanical connector **25** is arranged to control an electrical connection between the load **12** and the battery pack **100.** However, if a comparably large load current ***i*₁₂** flows between the load **12** and the battery pack **100** upon actuation (opening) of the electromechanical connector **25,** there is a significant risk of arcing and potentially welding of the electromechanical connector **25** due to an air gap being provided by at electromechanical connector **25** at a start of an opening operation and at an end of a closing operation. A risk of welding of the electromechanical connector **25** is particularly high in case of an inductive load **12** such an electric motor. The same issue arises upon closing the electromechanical connector **25** where inrush currents may cause welding of the electromechanical connector **25.** It should be mentioned that welding is one extreme that may occur and that overvoltage (voltage spikes) and heating are other issues associated with operating the electromechanical connector **25** with a load current ***i*₁₂** flowing. To reduce, mitigate and even solve this issue, the energy storage system **20** may be configured to control the current protection circuitry **200** to open the transistor device **210,** i.e. break the current path between the battery pack **100** and the load **12** prior to causing opening or the electromechanical connector **25.** Correspondingly, the energy storage system **20** may be configured to cause closing of the electromechanical connector **25** prior to causing control of the current protection circuitry **200** to close the transistor device **210,** i.e. close the current path between the battery pack **100** and the load **12.** This significantly reduces a wear of the costly electromechanical connector **25.**

In **FIG. 9****,** an exemplary battery pack **100** is shown. The battery pack **100** comprise one or more battery cells **110.** The battery pack **100** may be configured with any feature or example presented herein. The battery pack **100** comprise one or more resettable over current protection circuitry **200** as presented herein. The battery pack **100** comprises a first terminal **101** and a second terminal **102** for connecting the battery pack **100** to the load **25** (optionally operatively via e.g. the electromechanical connector **25).** The battery pack **100** may comprise optional battery pack processing circuitry **120.** The battery pack processing circuitry **120** may be configured to control, configure, operate and/or monitor the resettable over current protection circuitry **200.** The battery pack processing circuitry **120** may be configured to obtain operational data of the battery pack **100** and provide the operational data to e.g. the energy storage system **20.** At least one over current protection circuitry **200** is provided in a current path between the one or more battery cells **110** and the first terminal **101** or the second terminal **102.** In some examples, separate over current protection circuitry **200** may be arranged between each sets of battery cells and the first terminal **101** or the second terminal **102.** In other words, a specific current protection circuitry **200** will only be arranged in a portion of the current path between the battery cells **110** and the first terminal 101 or the second terminal **102.**

Example 1. A resettable over current protection circuitry **200** for a energy storage system **20** of a vehicle **10,** the resettable over current protection circuitry **200** is configured to be arranged between one or more battery cells **110** and a load **12** and comprises: a transistor device **210** configured for controlling an electrical connection between the battery cell **110** and the load **12,** current sensor circuitry **220** for measuring a load current ***i*₁₂** between the one or more battery cells **110** and the load **12,** control circuitry **230** configured to control the transistor device **210** to break the electrical connection between the one or more battery cells **110** and the load **12** responsive to the load current ***i*₁₂** being above a first predetermined threshold **233** during a first predetermined time ***T*₂₃₃**.

Example 2. The resettable over current protection circuitry **200** of example 1, wherein the current sensor circuitry **220** comprises a comparator **231** configured to generate a control signal **232** configured to control the transistor device **210** to break the electrical connection between the one or more battery cells **110** and the load **12.**

Example 3. The resettable over current protection circuitry **200** of example 1 or 2, wherein the control circuitry **230** is further configured to close the electrical connection between the one or more battery cells **110** and the load **12** responsive to the load current ***i*₁₂** being below a predetermined second threshold **236** during a second predetermined time ***T*₂₃₆.**

Example 4. The resettable over current protection circuitry **200** of any one of examples 1 to 3, wherein the control circuitry **230** is configured to close the electrical connection between the one or more battery cells **110** and the load **12** responsive to receiving a reset signal **21.**

Example 5. The resettable over current protection circuitry **200** of any one of examples 1 to 4, wherein the current sensor circuitry **220** comprises a known resistance arranged between the one or more battery cells **110** and the load **12,** and the current sensor circuitry **220** is configured to measure the load current ***i*₁₂** by measuring a voltage drop across the known resistance.

Example 6. The resettable over current protection circuitry **200** of example 5, wherein the known resistance is an on-resistance of the transistor device **210.**

Example 7. The resettable over current protection circuitry **200** of any one of examples 1 to 6, wherein the first predetermined time ***T*₂₃₃** is determined by a time constant of hardware components of the control circuitry **230.**

Example 8. The resettable over current protection circuitry **200** of any one of examples 1 to 7, wherein the control circuitry **230** is configured to control the transistor device **210** to limit the electrical connection between the battery cell **110** and the load **12** responsive to the load current **i₁₂** being above a third predetermined threshold **230**c**_233** during a third predetermined time ***T*_{230*c*_233}.**

Example 9. The resettable over current protection circuitry **200** of any one of examples 1 to 8, further comprising an internal power source **240** arranged to power the resettable over current protection circuitry **200.**

Example 10. The resettable over current protection circuitry **200** of example 9, wherein the internal power source **240** is a rechargeable power source arranged to be charged from the battery cell **110.**

Example 11. The resettable over current protection circuitry **200** of example 1, wherein the current sensor circuitry **220** comprises a comparator **231** configured to generate a control signal **232** configured to control the transistor device **210** to break the electrical connection between the one or more battery cells **110** and the load **12;** the control circuitry **230** is further configured to close the electrical connection between the one or more battery cells **110** and the load **12** responsive to the load current ***i*₁₂** being below a predetermined second threshold **236** during a second predetermined time ***T*₂₃₆;** the control circuitry **230** is configured to close the electrical connection between the one or more battery cells **110** and the load **12** responsive to receiving a reset signal **21;** the current sensor circuitry **220** comprises a known resistance arranged between the one or more battery cells **110** and the load **12,** and the current sensor circuitry **220** is configured to measure the load current ***i*₁₂** by measuring a voltage drop across the known resistance; the known resistance is an on-resistance of the transistor device **210;** the first predetermined time ***T*₂₃₃** is determined by a time constant of hardware components of the control circuitry **230;** the control circuitry **230** is configured to control the transistor device **210** to limit the electrical connection between the battery cell **110** and the load **12** responsive to the load current ***i*₁₂** being above a third predetermined threshold **230**c**_233** during a third predetermined time ***T***_{**230c_**233}; the internal power source **240** is a rechargeable power source arranged to be charged from the battery cell **110;** and further comprising an internal power source **240** arranged to power the resettable over current protection circuitry **200.**

Example 12. A battery pack **100** comprising one or more battery cells **110,** at least two terminals **101, 102** for connecting the battery pack **100** to a load **12** and the resettable over current protection circuitry **200** of any one of examples 1 to 11 arranged in a current path of the one or more battery cells **110** and the at least two terminals **101, 102.**

Example 13. The battery pack **100** of example 12, comprising two or more battery cells **110** wherein the resettable over current protection circuitry **200** is arranged in a portion of the current path of the one or more battery cells **110** and the at least two terminals **101, 102** located between the two or more battery cells **110.**

Example 14. An energy storage system **20,** comprising at least one battery pack 100 of example 12 or 13 and an energy storage processing circuitry **22** operatively connected to and configured to control the control circuitry **230** of the resettable over current protection circuitry **200** of the battery pack **100.**

Example 15. The energy storage system **20** of example 14, wherein the energy storage system processing circuitry **22** is configured to cause control of the transistor device 210 to provide a pre-charge current to the load **12.**

Example 16. The energy storage system **20** of example 15, wherein the pre-charge current is provided by PWM control of the transistor device **210.**

Example 17. The energy storage system **20** of example 15, wherein the pre-charge current is provided by linear control of the transistor device **210.**

Example 18. The energy storage system **20** of any one of examples 13 to 17, wherein the energy storage system processing circuitry **22** is further configured to cause control at least one electromechanical connector **25** arranged to selectively connect the at least one battery pack **100** to the load **12.**

Example 19. The energy storage system **20** of example 18, wherein the energy storage system processing circuitry **22** is configured to, prior to causing the electromechanical connector **25** to disconnect the at least one battery pack **100** from the load **12,** control the transistor device **210** to break the electrical connection between the battery cell **110** and the load **12.**

Example 20. The energy storage system **20** of example 18 or 19, wherein the energy storage system processing circuitry **22** is configured to, prior to causing the electromechanical connector **25** to connect the at least one battery pack **100** to the load **12,** control the transistor device **210** to break the electrical connection between the battery cell **110** and the load **12.**

Example 21. A vehicle **10** comprising the energy storage system **20** of any one of examples 14 to 20.

Example 22. The vehicle **10** of example 21, wherein the vehicle **10** is a heavy-duty or nautical vehicle.

Example 23. The vehicle of example 21 or 22, wherein the vehicle **10** is at least partly propelled by an electrical motor **12** powered by the battery pack **100** of any one of examples 12 or 13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A resettable over current protection circuitry **(200)** for an energy storage system **(20)** of a vehicle **(10),** the resettable over current protection circuitry **(200)** is configured to be arranged between one or more battery cells **(110)** and a load **(12)** and comprises:
a transistor device **(210)** configured for controlling an electrical connection between the battery cell **(110)** and the load **(12),**
current sensor circuitry **(220)** for measuring a load current **(*i*₁₂)** between the one or more battery cells **(110)** and the load **(12),**
control circuitry **(230)** configured to control the transistor device **(210)** to break the electrical connection between the one or more battery cells **(110)** and the load **(12)** responsive to the load current **(*i*₁₂)** being above a first predetermined threshold **(233)** during a first predetermined time **(*T*₂₃₃).**

2. The resettable over current protection circuitry **(200)** of claim 1, wherein the current sensor circuitry **(220)** comprises a comparator **(231)** configured to generate a control signal **(232)** configured to control the transistor device **(210)** to break the electrical connection between the one or more battery cells **(110)** and the load **(12).**

3. The resettable over current protection circuitry **(200)** of claim 1 or 2, wherein the control circuitry **(230)** is further configured to close the electrical connection between the one or more battery cells **(110)** and the load **(12)** responsive to the load current **(*i*₁₂)** being below a predetermined second threshold **(236)** during a second predetermined time **(*T*₂₃₆).**

4. The resettable over current protection circuitry **(200)** of any one of claims 1 to 3, wherein the control circuitry **(230)** is configured to close the electrical connection between the one or more battery cells **(110)** and the load **(12)** responsive to receiving a reset signal **(21).**

5. The resettable over current protection circuitry **(200)** of any one of claims 1 to 4, wherein the current sensor circuitry **(220)** comprises a known resistance arranged between the one or more battery cells **(110)** and the load **(12),** and the current sensor circuitry **(220)** is configured to measure the load current **(*i*₁₂)** by measuring a voltage drop across the known resistance.

6. The resettable over current protection circuitry **(200)** of claim 5, wherein the known resistance is an on-resistance of the transistor device **(210).**

7. The resettable over current protection circuitry **(200)** of any one of claims 1 to 6, wherein the first predetermined time **(*T*₂₃₃)** is determined by a time constant of hardware components of the control circuitry **(230).**

8. The resettable over current protection circuitry **(200)** of any one of claims 1 to 7, wherein the control circuitry **(230)** is configured to control the transistor device **(210)** to limit the electrical connection between the battery cell **(110)** and the load **(12)** responsive to the load current **(*i*₁₂)** being above a third predetermined threshold **(230**c**_233)** during a third predetermined time **(*T*_{230*c*_233}).**

9. The resettable over current protection circuitry **(200)** of any one of claims 1 to 8, further comprising an internal power source **(240)** arranged to power the resettable over current protection circuitry **(200).**

10. The resettable over current protection circuitry **(200)** of claim 1, wherein the current sensor circuitry **(220)** comprises a comparator **(231)** configured to generate a control signal **(232)** configured to control the transistor device **(210)** to break the electrical connection between the one or more battery cells **(110)** and the load **(12);** the control circuitry **(230)** is further configured to close the electrical connection between the one or more battery cells **(110)** and the load **(12)** responsive to the load current **(*i*₁₂)** being below a predetermined second threshold **(236)** during a second predetermined time **(*T*₂₃₆);** the control circuitry **(230)** is configured to close the electrical connection between the one or more battery cells **(110)** and the load **(12)** responsive to receiving a reset signal **(21);** wherein the current sensor circuitry **(220)** comprises a known resistance arranged between the one or more battery cells **(110)** and the load **(12),** and the current sensor circuitry **(220)** is configured to measure the load current **(*i*₁₂)** by measuring a voltage drop across the known resistance; the known resistance is an on-resistance of the transistor device **(210);** the first predetermined time **(*T*₂₃₃)** is determined by a time constant of hardware components of the control circuitry **(230);** the control circuitry **(230)** is configured to control the transistor device **(210)** to limit the electrical connection between the battery cell **(110)** and the load **(12)** responsive to the load current **(*i*₁₂)** being above a third predetermined threshold **(230**c**_233)** during a third predetermined time **(*T*_{230*c*_233});** and further comprising an internal power source **(240)** arranged to power the resettable over current protection circuitry **(200)** wherein the internal power source **(240)** is a rechargeable power source arranged to be charged from the battery cell **(110)**

11. A battery pack **(100)** comprising one or more battery cells **(110),** at least two terminals **(101, 102)** for connecting the battery pack **(100)** to a load **(12)** and the resettable over current protection circuitry **(200)** of any one of claims 1 to 10 arranged in a current path of the one or more battery cells **(110)** and the at least two terminals **(101, 102).**

12. An energy storage system **(20),** comprising at least one battery pack **(100)** of claim 11 and an energy storage processing circuitry **(22)** operatively connected to and configured to control the control circuitry **(230)** of the resettable over current protection circuitry **(200)** of the battery pack **(100).**

13. The energy storage system **(20)** of claim 12, wherein the energy storage system processing circuitry **(22)** is configured to cause control of the transistor device **(210)** to provide a pre-charge current to the load **(12).**

14. The energy storage system **(20)** of claim 12 or 13, wherein the energy storage system processing circuitry **(22)** is further configured to cause control of at least one electromechanical connector **(25)** arranged to selectively connect the at least one battery pack **(100)** to the load **(12),** and:
prior to causing the electromechanical connector **(25)** to disconnect the at least one battery pack **(100)** from the load **(12),** control the transistor device **(210)** to break the electrical connection between the battery cell **(110)** and the load **(12)** and/or
wherein the energy storage system processing circuitry **(22)** is configured to, prior to causing the electromechanical connector **(25)** to connect the at least one battery pack **(100)** to the load **(12),** control the transistor device **(210)** to break the electrical connection between the battery cell **(110)** and the load **(12).**

15. A vehicle **(10)** comprising the energy storage system **(20)** of any one of claims 12 to 14.

## Amended claims

### Amended claims in accordance with Rule 137(2) EPC.

1. A resettable over current protection circuitry **(200)** for an energy storage system **(20)** of a vehicle **(10),** the resettable over current protection circuitry **(200)** is configured to be arranged between one or more battery cells **(110)** and a load **(12)** and comprises:
a transistor device **(210)** configured for controlling an electrical connection between the battery cell **(110)** and the load **(12),**
current sensor circuitry **(220)** for measuring a load current **(*i*₁₂)** between the one or more battery cells **(110)** and the load **(12),**
control circuitry **(230)** configured to control the transistor device **(210)** to break the electrical connection between the one or more battery cells **(110)** and the load **(12)** responsive to the load current **(*i*₁₂)** being above a first predetermined threshold **(233)** for a first predetermined time (***T*₂₃₃**)
wherein the control circuitry **(230)** is configured to control the transistor device **(210)** to limit the electrical connection between the battery cell **(110)** and the load **(12)** responsive to the load current **(*i*₁₂)** being above a predetermined threshold **(230c_233)** for a predetermined time (***T*_{230c_233}**).

2. The resettable over current protection circuitry **(200)** of claim 1, wherein the current sensor circuitry **(220)** comprises a comparator **(231)** configured to generate a control signal **(232)** configured to control the transistor device **(210)** to break the electrical connection between the one or more battery cells **(110)** and the load **(12).**

3. The resettable over current protection circuitry **(200)** of claim 1 or 2, wherein the control circuitry **(230)** is further configured to close the electrical connection between the one or more battery cells **(110)** and the load **(12)** responsive to the load current **(*i*₁₂)** being below a predetermined second threshold **(236)** during a second predetermined time (***T*₂₃₆**).

4. The resettable over current protection circuitry **(200)** of any one of claims 1 to 3, wherein the control circuitry **(230)** is configured to close the electrical connection between the one or more battery cells **(110)** and the load **(12)** responsive to receiving a reset signal **(21).**

5. The resettable over current protection circuitry **(200)** of any one of claims 1 to 4, wherein the current sensor circuitry **(220)** comprises a known resistance arranged between the one or more battery cells **(110)** and the load **(12),** and the current sensor circuitry **(220)** is configured to measure the load current **(*i*₁₂)** by measuring a voltage drop across the known resistance.

6. The resettable over current protection circuitry **(200)** of claim 5, wherein the known resistance is an on-resistance of the transistor device **(210).**

7. The resettable over current protection circuitry **(200)** of any one of claims 1 to 6, wherein the first predetermined time (***T*₂₃₃**) is determined by a time constant of hardware components of the control circuitry **(230).**

8. The resettable over current protection circuitry **(200)** of any one of claims 1 to 7, further comprising an internal power source **(240)** arranged to power the resettable over current protection circuitry **(200).**

9. The resettable over current protection circuitry **(200)** of claim 1, wherein the current sensor circuitry **(220)** comprises a comparator **(231)** configured to generate a control signal **(232)** configured to control the transistor device **(210)** to break the electrical connection between the one or more battery cells **(110)** and the load **(12);** the control circuitry **(230)** is further configured to close the electrical connection between the one or more battery cells **(110)** and the load **(12)** responsive to the load current **(*i*₁₂)** being below a predetermined second threshold **(236)** during a second predetermined time (***T*₂₃₆**); the control circuitry **(230)** is configured to close the electrical connection between the one or more battery cells **(110)** and the load **(12)** responsive to receiving a reset signal **(21);** wherein the current sensor circuitry **(220)** comprises a known resistance arranged between the one or more battery cells **(110)** and the load **(12),** and the current sensor circuitry **(220)** is configured to measure the load current **(*i*₁₂)** by measuring a voltage drop across the known resistance; the known resistance is an on-resistance of the transistor device **(210);** the first predetermined time (***T*₂₃₃**) is determined by a time constant of hardware components of the control circuitry **(230);** the control circuitry **(230)** is configured to control the transistor device **(210)** to limit the electrical connection between the battery cell **(110)** and the load **(12)** responsive to the load current **(*i*₁₂)** being above a third predetermined threshold **(230c_233)** during a third predetermined time (***T*_{230c_233}**); and further comprising an internal power source **(240)** arranged to power the resettable over current protection circuitry **(200)** wherein the internal power source **(240)** is a rechargeable power source arranged to be charged from the battery cell **(110)**

10. A battery pack **(100)** comprising one or more battery cells **(110),** at least two terminals **(101, 102)** for connecting the battery pack **(100)** to a load **(12)** and the resettable over current protection circuitry **(200)** of any one of claims 1 to 9 arranged in a current path of the one or more battery cells **(110)** and the at least two terminals **(101, 102).**

11. An energy storage system **(20),** comprising at least one battery pack **(100)** of claim 10 and an energy storage processing circuitry **(22)** operatively connected to and configured to control the control circuitry **(230)** of the resettable over current protection circuitry **(200)** of the battery pack **(100).**

12. The energy storage system **(20)** of claim 11, wherein the energy storage system processing circuitry **(22)** is configured to cause control of the transistor device **(210)** to provide a pre-charge current to the load **(12).**

13. The energy storage system **(20)** of claim 11 or 12, wherein the energy storage system processing circuitry **(22)** is further configured to cause control of at least one electromechanical connector **(25)** arranged to selectively connect the at least one battery pack (100) to the load **(12),** and:
prior to causing the electromechanical connector **(25)** to disconnect the at least one battery pack **(100)** from the load **(12),** control the transistor device **(210)** to break the electrical connection between the battery cell **(110)** and the load **(12)** and/or
wherein the energy storage system processing circuitry **(22)** is configured to, prior to causing the electromechanical connector **(25)** to connect the at least one battery pack **(100)** to the load **(12),** control the transistor device **(210)** to break the electrical connection between the battery cell **(110)** and the load **(12).**

14. A vehicle **(10)** comprising the energy storage system **(20)** of any one of claims 11 to 13.
